# EUROPÄISCHE PATENTANMELDUNG

(11) **EP 4 085 744 A1**
(43) Veröffentlichungstag der Anmeldung: **09.11.2022**
(21) Anmeldenummer: 22172303.4
(22) Anmeldetag: 09.05.2022
(51) Int. Cl.: A01C 23/00

(54) **VERTEILERVORRICHTUNG MIT VERSTELLBAREM DURCHTRITTSQUERSCHNITT**

(30) Priorität: 07.05.2021 DE 202021102511 U
(71) Anmelder: Vogelsang GmbH & Co. KG, 49632 Essen (DE)
(72) Erfinder: LUCKS, Carsten, 49632 Essen (DE)
(74) Vertreter: Eisenführ Speiser

(57) **Zusammenfassung**

Die Offenbarung betrifft eine Verteilervorrichtung zum Verteilen von feststoffhaltigen Flüssigkeiten, umfassend eine Verteilerkammer mit einer Einlassöffnung, eine erste Lochmesseranordnung mit mehreren Lochmesserdurchtrittsöffnungen, ein erstes Schneidmesser (31) sowie eine Messerantriebseinrichtung, wobei die erste Lochmesseranordnung ein erstes Wandelement mit mehreren ersten Wanddurchtrittsöffnungen und ein zweites Wandelement mit mehreren zweiten Wanddurchtrittsöffnungen umfasst, wobei die ersten und zweiten Wanddurchtrittsöffnungen zumindest teilweise überlappen und hierdurch die Lochmesserdurchtrittsöffnungen bilden, das erste Wandelement und das zweite Wandelement einander anliegen und relativ zueinander bewegbar sind.

## Beschreibung

Die Erfindung betrifft eine Verteilervorrichtung zum Verteilen von feststoffhaltigen Flüssigkeiten, insbesondere Gülle, umfassend eine Verteilerkammer mit einer Einlassöffnung, die in einen Kammerinnenraum der Verteilerkammer mündet, wobei die Verteilerkammer eine erste Wandung, insbesondere eine erste Stirnwand, mit mehreren ersten Anschlussstutzen aufweist, eine erste Lochmesseranordnung mit mehreren Lochmesserdurchtrittsöffnungen, die den Kammerinnenraum mit den mehreren ersten Anschlussstutzen verbinden, ein erstes Schneidmesser, das mindestens eine Schneidkante aufweist, die an der ersten Lochmesseranordnung anliegt und relativ zu der ersten Lochmesseranordnung bewegbar ist, eine Messerantriebseinrichtung, die mit dem ersten Schneidmesser gekoppelt und ausgebildet ist, um das erste Schneidmesser relativ zu der ersten Lochmesseranordnung auf einer Bewegungsbahn zu bewegen.

Verteilervorrichtungen dieser Art dienen dazu, feststoffhaltige Flüssigkeiten wie Gülle aus einer Zufuhrleitung auf mehrere Anschlussstutzen zu verteilen, an welche dann Schlauchleitungen angeschlossen werden, die über ein Schleppschlauchgestänge dann die Flüssigkeit über eine große Breite auf einer Ackerfläche ausbringen können. Die Verteilervorrichtungen sind dabei so ausgeführt, dass die durch die Feststoffe in der Flüssigkeit drohende Verstopfung oder ungleichmäßige Förderung der Flüssigkeit durch eine Lochmesseranordnung und ein Schneidmesser, das relativ zu der Lochmesseranordnung bewegt wird, vermieden wird. Das Schneidmesser bewirkt hierbei eine regelmäßige Scherwirkung auf die Feststoffe in der Flüssigkeit, wenn es die Lochmesserdurchtrittsöffnungen in der Lochmesseranordnung überstreicht, sodass eine Zerkleinerung der Feststoffe stattfindet und zugleich durch die vorübergehende Abdeckung der Lochmesserdurchtrittsöffnungen eine Pulsation in den Anschlussstutzen und den daran anschließenden Schlauchleitungen erzeugt wird. Beides bewirkt, dass die Förderung der Flüssigkeit durch alle Anschlussstutzen gleichmäßig erfolgt und Verstopfungen vermieden werden.

Verteilervorrichtungen sind in verschiedenen Bauformen vorbekannt. So gibt es topfartige Anordnungen, bei denen die Vielzahl der Anschlussstutzen auf der Unterseite der Verteilerkammer angeordnet und die Lochmesseranordnung als Platte oder Scheibe ausgebildet ist. Das Schneidmesser kann bei dieser Anordnung um eine quasi vertikale Achse rotieren und der Zufluss der Flüssigkeit erfolgt zum Beispiel durch eine zentrale Öffnung von oben in die Verteilerkammer. Eine solche Verteileranordnung ist aus EP 3 013 870 B1 vorbekannt.

Eine andere Bauform von Verteilervorrichtungen sieht eine quasi horizontal liegende Antriebswelle vor, um welche das Schneidmesser rotiert. Die Anschlussstutzen sind hierbei an einer seitlichen Stirnfläche der Verteilervorrichtung angeordnet. Diese Ausgestaltung kann auch mit Anschlussstutzen auf zwei gegenüberliegenden seitlichen Stirnflächen ausgerüstet sein, um die Anzahl der Anschlussstutzen weiter zu erhöhen. In diesem Fall sind in der Verteilerkammer auf beiden Seiten entsprechende Lochmesseranordnungen vorgesehen und dementsprechend auch auf beiden Lochmesseranordnungen Schneidmesser anliegend, die entsprechend durch die horizontal liegende Antriebswelle in eine Rotation versetzt werden. Eine solche Verteilervorrichtung ist beispielsweise aus WO 2020/127310 A1 vorbekannt.

Aus EP 2 850 928 B1 ist eine weitere Verteilervorrichtung vorbekannt, bei der sich das Schneidmesser mit einer exzentrischen Bewegung über die Durchtrittsöffnungen in der Lochmesseranordnung bewegt.

Grundsätzlich ist es für eine effektive und gleichmäßige Ausbringung der Flüssigkeit notwendig, dass die Feststoffe in der Flüssigkeit durch die Schneidmesser/Lochscheibenanordnung ausreichend zerkleinert werden. Es ist weiterhin vorteilhaft, wenn die Flüssigkeit mit Druckpulsen gefördert wird, deren Frequenz und/oder Amplitude einerseits nicht zu gering ist/sind, um Verstopfungen zu vermeiden, andererseits aber auch nicht zu hoch, um an die Anschlussstutzen angeschlossene Schläuche, Kupplungen und dergleichen nicht übermäßig mechanisch zu belasten. Zugleich muss die Ausbringrate, also das durch die Verteilervorrichtung geförderte Flüssigkeitsvolumen pro Zeiteinheit, richtig bemessen sein und beispielsweise an die Fahrgeschwindigkeit des Fahrzeugs, mit dem ein Schleppschlauchgestänge gezogen wird, angepasst werden. Zwar kann durch Erhöhung der Bewegungsgeschwindigkeit der Schneidmesser und Erhöhung der Förderrate der Flüssigkeit Einfluss auf einige dieser einzustellenden Parameter genommen werden, jedoch ist nach Erkenntnis der Erfinder es hierdurch nicht möglich, die gewünschten Betriebsparameter für jede Art von Flüssigkeit und bei jeder Umgebungsbedingung ideal einzustellen. Insbesondere ist hierbei zu berücksichtigen, dass Verteilervorrichtungen dazu eingesetzt werden, um Flüssigkeiten unterschiedlicher Viskosität zu verteilen und dass unterschiedliche Feststoffgehalte und unterschiedliche Beschaffenheiten der Feststoffe auftreten. Weiterhin wird insbesondere durch die Temperatur der Flüssigkeit deren Viskosität und Förderverhalten weiter beeinflusst.

Der Erfindung liegt vor diesem Hintergrund die Aufgabe zugrunde, eine Verteilervorrichtung bereitzustellen, welche in besserer Weise die Einstellung der gewünschten Parameter für die Verteilung der Flüssigkeit und das Ausbringen der Flüssigkeit mithilfe einer Verteilervorrichtung ermöglicht.

Diese Aufgabe wird erfindungsgemäß gelöst mit einer Verteilervorrichtung der vorgenannten Art, indem die erste Lochmesseranordnung ein erstes Wandelement mit mehreren ersten Wanddurchtrittsöffnungen und ein zweites Wandelement mit mehreren zweiten Wanddurchtrittsöffnungen umfasst, wobei die ersten und zweiten Wanddurchtrittsöffnungen zumindest teilweise überlappen und hierdurch die Lochmesserdurchtrittsöffnungen bilden, das erste Wandelement und das zweite Wandelement einander anliegen und relativ zueinander bewegbar sind, die ersten Wanddurchtrittsöffnungen und die zweiten Wanddurchtrittsöffnungen sich in einer ersten Position des ersten Wandelements zu dem zweiten Wandelement so überlappen, dass zwischen einer ersten Wanddurchtrittsöffnung der mehreren ersten Wanddurchtrittsöffnungen und einer zweiten Wanddurchtrittsöffnung der mehreren zweiten Wanddurchtrittsöffnungen eine erste Überlappung mit einem ersten Überlappungsdurchtrittsquerschnitt ausgebildet ist, der den Querschnitt einer Lochmesserdurchtrittsöffnung der mehreren ersten Lochmesserdurchtrittsöffnungen in der ersten Position ausbildet, und die ersten Wanddurchtrittsöffnungen und die zweiten Wanddurchtrittsöffnungen sich in einer zweiten Position des ersten Wandelements zu dem zweiten Wandelement so überlappen, dass zwischen der ersten Wanddurchtrittsöffnung und der zweiten Wanddurchtrittsöffnung eine zweite Überlappung mit einem zweiten Überlappungsdurchtrittsquerschnitt ausgebildet ist, der den Querschnitt der Lochmesserdurchtrittsöffnung der mehreren ersten Lochmesserdurchtrittsöffnungen in der zweiten Position ausbildet und der kleiner als der erste Überlappungsdurchtrittsquerschnitt ist.

Erfindungsgemäß weist die Verteilervorrichtung eine Lochmesseranordnung auf, die ein erstes und ein zweites Wandelement umfasst. Jedes Wandelement weist mehrere Wanddurchtrittsöffnungen auf. Die Wandelemente können als Platte, Scheibe, als Zylinderwandsegment ausgeführt sein. Die Wanddurchtrittsöffnungen in den Wandelementen können als zylindrische Bohrungen, mehreckige Durchbrüche oder Öffnungen mit sonstiger Kontur ausgeführt sein. Die beiden Wandelemente liegen einander an, was bedeutet, dass eine Fläche des ersten Wandelements an einer Fläche des zweiten Wandelements anliegt. Dieses Anliegen ist im Wesentlichen spaltfrei, wobei eine geringe Toleranz mit lokaler oder allgemeiner Spaltbildung zwischen den beiden Wandelementen für die Funktionsfähigkeit der Erfindung nicht entscheidend abträglich ist.

Die Wanddurchtrittsöffnungen in den beiden Wandelementen sind so angeordnet, dass diese durch eine Relativbewegung der beiden Wandelemente zueinander in eine Überlappung gebracht werden können. Unter einer Überlappung ist hierbei zu verstehen, dass sich ein Öffnungsquerschnitt einer ersten Wanddurchtrittsöffnung mit einem Öffnungsquerschnitt einer zweiten Wanddurchtrittsöffnung überschneidet, sodass Flüssigkeit durch diese beiden Wanddurchtrittsöffnungen insgesamt durch die Lochmesseranordnung hindurchströmen kann. Dabei kann durch die Relativbewegung der beiden Wandelemente zueinander einerseits eine teilweise Überlappung mit zumindest zwei einstellbaren Überlappungsgraden eingestellt werden, das heißt, die durch die Überlappung erzeugte überschneidende Querschnittsfläche der beiden Wanddurchtrittsöffnungen kann in zumindest zwei unterschiedlichen Flächengrößen eingestellt werden. Bevorzugt ist es, dass die beiden Wandelemente und die darin ausgebildeten Wanddurchtrittsöffnungen so ausgebildet sind und zueinander bewegt werden können, dass auch eine vollständige Überlappung einer ersten und einer zweiten Wanddurchtrittsöffnung erzielt werden kann, sodass der Querschnitt der Lochmesserdurchtrittsöffnung sich als Querschnitt der Wanddurchtrittsöffnung darstellt und hierdurch ein maximaler Durchflussquerschnitt bereitgestellt ist.

Die Wandelemente und darin angeordneten Wanddurchtrittsöffnungen können so ausgebildet sein, dass alle ersten Wanddurchtrittsöffnungen in einer Überlappung mit allen zweiten Wanddurchtrittsöffnungen in einer 1:1-Zuordnung stehen und diese Überlappung auch jeweils für jede erste und zweite Wanddurchtrittsöffnung übereinstimmend ist und übereinstimmend verstellt werden kann. Erfindungsgemäß kann aber auch vorgesehen sein, dass in bestimmten Positionen nicht alle ersten Wanddurchtrittsöffnungen mit zweiten Wanddurchtrittsöffnungen überlappen und dass der Überlappungsgrad von den ersten und zweiten Wanddurchtrittsöffnungen nicht für alle Lochmesserdurchtrittsöffnungen einheitlich ist.

Erfindungsgemäß wird folglich die vorbekannte Lochmesserscheibe als Lochmesseranordnung aus zwei Wandelementen bereitgestellt, in denen entsprechende Wanddurchtrittsöffnungen ausgebildet sind. Durch ein Relativbewegen der beiden Wandelemente zueinander kann der Überlappungsgrad dieser Wanddurchtrittsöffnungen eingestellt werden und hierdurch der insgesamt zur Verfügung stehende Durchtrittsquerschnitt durch die Lochmesseranordnung in zumindest zwei unterschiedlichen Positionen mit unterschiedlichen Durchtrittsquerschnitten variiert werden. Bevorzugt ist es, dass der Überlappungsdurchtrittsquerschnitt stufenlos geändert werden kann, insbesondere von einem kleinen Überlappungsdurchtrittsquerschnitt stufenlos auf einen großen Überlappungsdurchtrittsquerschnitt verändert werden kann. Besonders bevorzugt ist es möglich, aus einer Position, in der die Wanddurchtrittsöffnungen der beiden Wandelemente nicht überlappen (Durchflusssperre) stufenlos bis in eine vollständige Überlappung mit maximalem Überlappungsdurchtrittsquerschnitt verstellen zu können.

Bevorzugt ist erfindungsgemäß ein Verstellmechanismus vorgesehen, mit dem die Verstellung der beiden Wandelemente zueinander bewirkt werden kann. Dies kann beispielsweise ein motorisch angetriebener Verstellmechanismus sein oder ein manuell einstellbarer Verstellmechanismus, beispielsweise mittels einer verstellbaren Welle, einem Schiebemechanismus, einem am Gehäuse abgestützten und gelagerten Schneckengewinde, das an einem gezahnten Abschnitt des Außenumfangs eines Wandelements eingreift.

Durch diese erfindungsgemäße Möglichkeit der Einstellung des Durchflussquerschnitts durch die Lochmesserscheibenanordnung kann der Strömungswiderstand in der Verteilervorrichtung eingestellt werden. Diese Einstellung erfolgt im Bereich der Lochmesseranordnung, sodass die dort verringerten Durchtrittsquerschnitte unmittelbar der Zerkleinerungswirkung des Schneidmessers und der direkten Druckpulseinwirkung nachfolgen, was trotz der teilweise sehr verringerten Durchtrittsquerschnitte keine Gefahr der Verstopfung durch Feststoffe in der Flüssigkeit nach sich zieht. Die Verstellmöglichkeit erlaubt es, bei zu hohen Amplituden der Druckpulse eine Dämpfungswirkung zu erzielen und hierdurch die Druckpulse zu verringern. Diese Dämpfungswirkung kann in zumindest zwei unterschiedlichen Stufen, vorzugsweise stufenlos, verringert oder vergrößert werden, um die Verteilervorrichtung an unterschiedliche Viskositäten der Flüssigkeit, unterschiedliche Volumenförderraten der Flüssigkeit und unterschiedliche Bewegungsgeschwindigkeiten des Schneidmessers anzupassen. Die Dämpfungswirkung und / oder die Durchsatzmenge durch die Verteilervorrichtung kann weiterhin in Abhängigkeit einer Fahrgeschwindigkeit einer Maschine, welche die Verteilervorrichtung trägt bzw. schleppt, und/oder in Abhängigkeit einer Ausbringdichte (Ausbringmenge pro Hektar) verringert oder vergrößert werden. Dies kann erfolgen, indem die Fahrgeschwindigkeit und/oder eine gewünschte Ausbringdichte als Eingangssignal in einer elektronischen Steuerung der Verteilervorrichtung verarbeitet wird und ein entsprechendes Ausgangssignal aus der Steuerung an die Verteilervorrichtung gesendet wird, um die Dämpfung, die Rotationsgeschwindigkeit oder andere Einstellparameter an der Verteilervorrichtung zu steuern.

Gemäß einer ersten bevorzugten Ausführungsform überlappt in der ersten Position jede der ersten Wanddurchtrittsöffnungen mit jeweils einer der zweiten Wanddurchtrittsöffnungen. Gemäß einer weiteren bevorzugten Ausführungsform steht in der ersten Position jede der ersten Lochmesserdurchtrittsöffnungen mit jeweils einem der ersten Anschlussstutzen in Fluidverbindung. Gemäß diesen beiden bevorzugten Ausführungsformen sind die ersten und zweiten Wanddurchtrittsöffnungen einerseits einander geometrisch und zahlenmäßig direkt zugeordnet, sodass eine 1:1-Zuordnung der Wanddurchtrittsöffnungen in den beiden Wandelementen erfolgt. Zusätzlich oder alternativ ist andererseits jede der gebildeten Lochmesserdurchtrittsöffnungen jeweils einem Anschlussstutzen zugeordnet und steht mit diesem in Fluidverbindung. Auf diese Weise wird eine gute Einstellbarkeit und Zuordnung der Wanddurchtrittsöffnungen und der Anschlussstutzen erreicht mit der Möglichkeit, einen maximalen Durchtrittsquerschnitt und Durchfluss durch die Verteilervorrichtung zu erzielen.

Es ist weiter bevorzugt, dass die ersten und zweiten Wanddurchtrittsöffnungen in der ersten Position einen ersten Durchlassquerschnitt durch die Lochmesseranordnung ausbilden, der größer ist als ein zweiter Durchlassquerschnitt, den die ersten und zweiten Wanddurchtrittsöffnungen in der zweiten Position ausbilden, wobei der erste Durchlassquerschnitt durch die Summe der Überlappungsdurchtrittsquerschnitte der ersten und zweiten Wanddurchtrittsöffnungen in der ersten Position, und der zweite Durchlassquerschnitt durch die Summe der Überlappungsdurchtrittsquerschnitte der ersten und zweiten Wanddurchtrittsöffnungen in der zweiten Position gebildet wird. Gemäß dieser Ausführungsform bilden die Lochmesserdurchtrittsöffnungen in der ersten Position einen geringeren Strömungswiderstand aus als in der zweiten Position. Die Dämpfungswirkung durch die Anordnung der Wanddurchtrittsöffnungen ist folglich in der zweiten Position höher als in der ersten Position. Dabei wird der Durchlassquerschnitt durch die Summe aller Überlappungsdurchtrittsquerschnitte der Lochmesserdurchtrittsöffnungen gebildet, das heißt, prozentual sind die ersten und zweiten Wanddurchtrittsöffnungen in der ersten Position mit einem höheren Überlappungsgrad angeordnet als in der zweiten Position.

Weiter bevorzugt ist vorgesehen, dass das erste Wandelement als erste Lochmesserscheibe und das zweite Wandelement als zweite Lochscheibe ausgebildet ist, die Schneidkante des Schneidmessers in einer ersten Einbaukonfiguration an einer ersten Stirnfläche der ersten Lochmesserscheibe anliegt, eine der ersten Stirnfläche gegenüberliegende zweite Stirnfläche der ersten Lochmesserscheibe an einer ersten Stirnfläche der zweiten Lochscheibe anliegt und eine der ersten Stirnfläche der zweiten Lochscheibe gegenüberliegende zweite Stirnfläche der zweiten Lochscheibe den Anschlussstutzen zugewandt ist. Gemäß dieser Ausführungsform sind die beiden Wandelemente als Lochmesserscheibe und Lochscheibe ausgebildet. Die Lochmesserscheibe ist hierbei auf der Seite des Schneidmessers angeordnet und das Schneidmesser liegt auf einer Stirnfläche der Lochmesserscheibe an. Die Lochscheibe liegt an der Lochmesserscheibe an und ist auf der Seite der Anschlussstutzen angeordnet.

Bei dieser Ausführungsform ist es besonders bevorzugt, wenn die erste Lochmesserscheibe ausgebildet ist, um in der ersten Einbaukonfiguration mit der ersten Stirnfläche zum Schneidmesser zu weisen und in einer zweiten Einbaukonfiguration mit der zweiten Stirnfläche zum Schneidmesser zu weisen, insbesondere indem die erste Lochmesserscheibe spiegelsymmetrisch um eine parallel zur Stirnfläche verlaufende Achse ausgebildet ist. Bei dieser Ausführungsform kann die Lochmesserscheibe in zwei unterschiedlichen Einbaukonfigurationen angeordnet werden, die sich darin unterscheiden, dass entweder die eine oder die andere Stirnfläche der Lochmesserscheibe an dem Schneidmesser anliegt. Hierdurch kann bei Verschleiß der Kanten der Wanddurchtrittsöffnungen in der Lochmesserscheibe die Lochmesserscheibe in der anderen Konfiguration montiert, also umgedreht werden, um hierdurch die nicht verschlissenen Kanten der anderen Stirnfläche für eine gute Schneidwirkung zu nutzen.

Es ist weiter bevorzugt, wenn die zweite Lochscheibe als zweite Lochmesserscheibe ausgebildet ist, und die Schneidkante des Schneidmessers in einer dritten Einbaukonfiguration an der ersten Stirnfläche der zweiten Lochmesserscheibe anliegt, die zweite Stirnfläche der zweiten Lochmesserscheibe an der ersten Stirnfläche der ersten Lochmesserscheibe anliegt und die zweite Stirnfläche der zweiten Lochscheibe den Auslassöffnungen zugewandt ist. Bei dieser Ausführungsform ist die zweite Lochscheibe ebenfalls als Lochmesserscheibe ausgeführt und die erste und zweite Lochmesserscheibe können einander ausgetauscht werden. Durch diese Ausgestaltung kann bei Verschleiß an der ersten Lochmesserscheibe ein Tausch der ersten und zweiten Lochmesserscheibe gegeneinander ausgeführt werden, sodass dann die zweite Lochmesserscheibe an dem Schneidmesser anliegt und die erste Lochmesserscheibe auf der Seite der Anschlussstutzen angeordnet ist. Hierdurch kann die unverschlissene zweite Lochmesserscheibe für die Schneidwirkung mit dem Schneidmesser eingesetzt werden.

Dabei ist es weiter bevorzugt, wenn die zweite Lochmesserscheibe ausgebildet ist, um in einer vierten Einbaukonfiguration mit der zweiten Stirnfläche zum Schneidmesser zu weisen, insbesondere indem die zweite Lochmesserscheibe spiegelsymmetrisch um eine parallel zur Stirnfläche verlaufende Achse ausgebildet ist. Gemäß dieser Fortbildungsform kann auch die zweite Lochmesserscheibe in zwei Einbaukonfigurationen angeordnet werden und hierdurch umgedreht werden, um bei Verschleiß der Schneidkanten auf einer Stirnfläche durch Umdrehen der zweiten Lochmesserscheibe die Kanten der Wanddurchtrittsöffnungen der anderen Stirnfläche für die Schneidwirkung mit dem Schneidmesser zu nutzen.

Insgesamt kann sich folglich bei zugleich bestehender Möglichkeit des Austausches der beiden Lochmesserscheiben und der Möglichkeit, die Lochmesserscheiben umzudrehen, vier Stirnflächen mit entsprechenden Kanten für die Schneidwirkung mit dem Schneidmesser genutzt werden, bevor die Lochmesserkonfiguration insgesamt verschlissen ist und ausgetauscht werden muss.

Dabei ist es besonders bevorzugt, wenn das erste und zweite Wandelement der Verteilervorrichtung baugleich sind. Hierdurch wird die Austauschbarkeit der beiden Lochmesserscheiben in einfacher Weise gewährleistet.

Gemäß einer weiteren bevorzugten Ausführungsform ist vorgesehen, dass dasjenige Wandelement des ersten und zweiten Wandelements, an dem die Schneidkante des Schneidmessers anliegt, unbeweglich zu der Schneidkammer montiert ist und das andere Wandelement des ersten und zweiten Wandelements relativ beweglich zu der Schneidkammer gelagert ist. Durch diese ortsfeste Anordnung des schneidmesserseitigen Wandelements wird eine gute Aufnahme der Reibkräfte und der schlagartig einwirkenden Schnittkräfte sowie der Vorspannkraft des Schneidmessers erreicht und der Verstellmechanismus zum Verstellen zwischen der ersten und zweiten Position nicht mit diesen Kräften beaufschlagt. Weiterhin ist es vorteilhaft, dass hierdurch eine fluchtende und ortsfeste Ausrichtung der Öffnungen in dem schneidmesserseitigen Wandelement zu den Auslassstutzen permanent eingehalten wird, unabhängig von einer Verstellung des anderen Wandelements. Es ist daher nicht erforderlich, die Auslassstutzen zu bewegen, um eine zuverlässige Durchströmung dieses messerseitigen Wandelements in vollständiger Überlappung mit den Anschlussstutzen in jeder Relativposition der beiden Wandelemente zueinander sicherzustellen. Das zu den Anschlussstutzen weisende Wandelement kann hierbei relativ innerhalb der Verteilerkammer bewegt werden und hierdurch die Relativbewegung zwischen den beiden Wandelementen bewirken, um den Überlappungsgrad der Wanddurchtrittsöffnungen einzustellen.

Es ist weiter bevorzugt, wenn die Lochmesseranordnung in einer dritten Position keine Überlappung zwischen den Wanddurchtrittsöffnung in dem ersten und zweiten Wandelement aufweist, sodass die Lochmesserdurchtrittsöffnungen gesperrt sind. Hierdurch wird eine vollständige Sperrung der Lochmesserdurchtrittsöffnungen erzielt, was zum Verhindern eines Durchflusses und Nachtropfens aus an die Anschlussstutzen angeschlossenen Schleppschläuchen vorteilhaft ist. Bei dieser Ausführungsform sind die Wanddurchtrittsöffnungen in jedem der beden Wandelementen solcherart beabstandet, dass zwischen zwei benachbarten Wanddurchtrittsöffnungen eines Wandelements eine Sperrfläche ausgebildet ist, die zumindest so groß wie eine Wanddurchtrittsöffnung des anderen Wandelementes ist.

Es ist weiter bevorzugt, wenn die Lochmesseranordnung mit einer Verstelleinrichtung gekoppelt ist, die einen Verstellaktuator umfasst und ausgebildet ist, um mittels des Verstellaktuators das erste und zweite Wandelement relativ zueinander zu verstellen.

Die Verstelleinrichtung kann durch eine mechanische Kopplung mittels Formschluss oder Kraftschluss erfolgen, beispielsweise über Hebel, Zahnrad, Reibrad oder dergleichen. Die Verstelleinrichtung kann insbesondere dazu ausgebildet sein, um eine Verstellkraft zwischen der Verteilerkammer und einem der beiden Wandelemente zu bewirken. Vorzugsweise wirkt die Verstelleinrichtung auf das dem Schneidmesser zugewandte Wandelement. Als Verstellaktuator kommen beispielsweise ein Elektromotor, ein Hydraulikzylinder oder dergleichen in Betracht. Durch die Verstelleinrichtung wird es möglich, eine gesteuerte Verstellung der Überschneidung der Wanddurchtrittsöffnungen in den beiden Wandelementen auszuführen. Die Verstellung kann entweder durch entsprechende Steueranweisungen eines Benutzers erfolgen, die über eine dann vorgesehene Benutzerschnittstelle eingegeben werden, im einfachsten Fall durch eine entsprechende Schalterbetätigung zum Aktivieren oder Deaktivieren des Stellaktuators. Neben einer solchen einfachen Steuerung sind auch Regelungsvorgänge ausführbar, bei denen der Verstellaktuator in Abhängigkeit von bestimmten gemessenen oder ermittelten Einflussgrößen angesteuert wird, um das Betriebsverhalten der Verteilervorrichtung zu optimieren.

Insbesondere ist es dabei bevorzugt, wenn das erste und zweite Wandelement der Lochmesseranordnung um eine Verstellachse zueinander verdrehbar gelagert sind und die Verstelleinrichtung ein Zahnradsegment umfasst, das an einem der beiden Wandelemente angeordnet ist und der Verstellaktuator ein Ritzel antreibt, das in das Zahnradsegment eingreift, um mittels des Verstellaktuators das erste und zweite Wandelement relativ zueinander zu verstellen. Sowohl das Zahnradsegment als auch das Ritzel können hierbei nach Art eines Zahnrads mit über den gesamten Umfang des Wandelements erstreckenden Zähnen ausgebildet sein oder mit einem gezahnten Abschnitt, der sich nur über einen begrenzten Winkelbereich um die Verstellachse erstreckt. Durch eine solche verzahnte Kopplung kann eine robuste und zuverlässige Verstellung der Überlappung erfolgen.

Noch weiter ist es bevorzugt, wenn die Verstelleinrichtung mit einer Steuereinheit signaltechnisch gekoppelt ist und die Steuereinheit mit einem Sensor signaltechnisch gekoppelt und ausgebildet ist, um aus von dem Sensor empfangenen Daten einen Kennwert für die Druckpulsationshöhe oder-frequenz zu bilden und um anhand dieses Kennwerts den Verstellaktuator anzusteuern. Gemäß dieser Ausführungsform ist die Verteilervorrichtung ausgebildet, um die Amplitude oder Frequenz der Druckpulsation während des Betriebs zu ermitteln und in Abhängigkeit eines oder beider Werte die Verstelleinrichtung anzusteuern, um hierdurch die Druckpulsationsamplitude oder-frequenz zu ändern. Hierdurch kann eine optimierte Amplitude (Höhe) oder Frequenz der Druckpulsation eingestellt werden, indem der Überlappungsgrad zwischen den Wanddurchtrittsöffnungen des ersten und zweiten Wandelements verändert wird, wobei dies in einem Regelkreis erfolgt. Die Erfassung der Druckpulsation kann auf verschiedene Art und Weise erfolgen, direkt durch eine Druckmessung oder indirekt, zum Beispiel durch Erfassung von Stromschwankungen in einem Antriebsmotor für eine Förderpumpe, Erfassung von durch die Druckpulsation bedingten Schwingungen an der Verteilervorrichtung oder an daran angeschlossenen Leitungen oder dergleichen. Grundsätzlich kann diese Fortbildungsform dann dazu genutzt werden, die Höhe oder Frequenz der Druckpulsation auf ein gewünschtes ideales Maß einzuregeln, zu minimieren oder zu maximieren, je nach gewünschtem Betriebszustand der Verteilervorrichtung.

Noch weiter ist es dabei bevorzugt, wenn der Sensor ein Drucksensor ist, der vorzugsweise im Kammerinnenraum, stromaufwärts der Einlassöffnung oder stromabwärts von einer der Auslassöffnungen angeordnet ist. Durch einen solchen Drucksensor kann die Amplitude und Frequenz der Druckpulsationen direkt erfasst werden und hieraus die Regelung der Verstelleinrichtung erfolgen.

Es ist weiter bevorzugt, wenn die Steuerungseinheit ausgebildet ist, um in einem ersten Schritt die Verstelleinrichtung in einer ersten Verstellrichtung anzusteuern, anhand der Sensordaten eine erste Veränderung der Druckpulsationen durch die Verstellung der Verstelleinrichtung im ersten Schritt festzustellen, in einem zweiten Schritt die Verstelleinrichtung in einer zu der ersten entgegengesetzten zweiten Verstellrichtung anzusteuern, anhand der Sensordaten eine zweite Veränderung der Druckpulsationen durch die Verstellung der Verstelleinrichtung im zweiten Schritt festzustellen, und die erste und die zweite Veränderung miteinander zu vergleichen und hierauf folgend in Abhängigkeit des Vergleichs die Verstelleinrichtung in derjenigen Verstellrichtung anzusteuern, für welche die Veränderung eine größere Verringerung der Druckpulsationen ergeben hat.

Mit dieser Regelungsweise wird nach Art eines lernenden Systems durch eine Verstellung in zwei Richtungen eine aktuelle Analyse des Systemverhaltens durchgeführt und aus dieser Analyse heraus eine Verstellung durchgeführt, die das System in den gewünschten Betriebspunkt bringt bzw. die gewünschte Optimierung des Betriebsverhaltens bewirkt. Dabei kann die Steuerungseinheit so ausgebildet sein, dass die Druckpulsationen laufend überwacht werden oder eine in vorbestimmten gleichmäßigen Zeitabständen erfolgende Überwachung stattfindet, beispielsweise mit einer Periodendauer von 5 Sekunden, 10 Sekunden, 15 Sekunden oder länger.

Alternativ kann die Ermittlung und Einstellung eines optimalen Betriebspunktes auch durch Vergleich der gemessenen Druckpulsationen mit einem abgespeicherten Zielwert erfolgen. Dieses Prinzip beruht darauf, dass es einen konstruktions- und größenabhängigen bestimmten Druckbereich gibt, in dem eine Verteilervorrichtung nach Erfahrung gut arbeitet. Dieser Bereich kann als Zielwert in einer Steuerungs/Regelungseinheit abgespeichert werden. In diesen Zielwert oder Zielwertbereich (z.B. 0,4 bar bis 1 bar) sollte sich die Steuerung dann nach Start einregeln und diesen halten, indem die Verstelleinrichtung so lange angesteuert wird, bis der Zielwert(-bereich) getroffen ist.

Noch weiter ist es bevorzugt, wenn sich die Lochmesserdurchtrittsöffnungen von einer dem Kammerinnenraum zugewandten ersten Stirnseite der ersten Lochmesseranordnung zu einer dem Kammerinnenraum abgewandten zweiten Stirnseite der zweiten Lochmesseranordnung erstrecken, wobei die Lochmesserdurchtrittsöffnungen im Bereich der zweiten Stirnseite größer sind als im Bereich der ersten Stirnseite, und/oder wobei die Größe und/oder der Auslassöffnungsquerschnitt der Lochmesserdurchtrittsöffnungen von der ersten Stirnseite zu der zweiten Stirnseite, insbesondere stetig, zunimmt.

Damit kann - wie im Bezug zur ersten Auslassöffnung beschrieben - auf vorteilhafte Weise eine verbesserte Schneidwirkung und eine verlängerte Lebensdauer der ersten Lochmesserplatte erreicht werden.

Ein weiterer Aspekt der Erfindung ist eine Lochmesseranordnung für eine Verteilervorrichtung, insbesondere eine Verteilervorrichtung nach einem der vorhergehenden Ansprüche, umfassend: eine erste Stirnfläche, eine der ersten Stirnfläche gegenüberliegende zweite Stirnfläche, mehrere Lochmesserdurchtrittsöffnungen, die sich von der ersten Stirnseite zu der zweiten Stirnseite erstrecken, ein erstes Wandelement mit mehreren ersten Wanddurchtrittsöffnungen und ein zweites Wandelement mit mehreren zweiten Wanddurchtrittsöffnungen, wobei die ersten und zweiten Wanddurchtrittsöffnungen zumindest teilweise überlappen und hierdurch die Lochmesserdurchtrittsöffnungen bilden, das erste Wandelement und das zweite Wandelement einander anliegen und relativ zueinander bewegbar sind, die ersten Wanddurchtrittsöffnungen und die zweiten Wanddurchtrittsöffnungen sich in einer ersten Position des ersten Wandelements zu dem zweiten Wandelement so überlappen, dass zwischen einer ersten Wanddurchtrittsöffnung der mehreren ersten Wanddurchtrittsöffnungen und einer zweiten Wanddurchtrittsöffnung der mehreren zweiten Wanddurchtrittsöffnungen eine erste Überlappung mit einem ersten Überlappungsdurchtrittsquerschnitt ausgebildet ist, der den Querschnitt einer Lochmesserdurchtrittsöffnung der mehreren ersten Lochmesserdurchtrittsöffnungen in der ersten Position ausbildet, und die ersten Wanddurchtrittsöffnungen und die zweiten Wanddurchtrittsöffnungen sich in einer zweiten Position des ersten Wandelements zu dem zweiten Wandelement so überlappen, dass zwischen der ersten Wanddurchtrittsöffnung und der zweiten Wanddurchtrittsöffnung eine zweite Überlappung mit einem zweiten Überlappungsdurchtrittsquerschnitt ausgebildet ist, der den Querschnitt der Lochmesserdurchtrittsöffnung der mehreren ersten Lochmesserdurchtrittsöffnungen in der zweiten Position ausbildet und der kleiner als der erste Überlappungsdurchtrittsquerschnitt ist. Eine solche Lochmesseranordnung eignet sich zur Nachrüstung bestehender Verteilerverrichtungen oder als Verschleißersatzteil.

Schließlich ist ein weiterer Aspekt ein Verfahren zum Einstellen der Amplitude einer Druckpulsation in einer Verteilervorrichtung für eine Flüssigkeit, mit den Schritten: Einleiten der Flüssigkeit in einen Kammerinnenraum durch eine oder mehrere Einlassöffnungen, Ausleiten der Flüssigkeit aus dem Kammerinnenraum durch mehrere Lochmesserdurchtrittsöffnungen, wobei jede der Lochmesserdurchtrittsöffnungen durch jeweils eine Wanddurchtrittsöffnung in einem ersten Wandelement und eine Wanddurchtrittsöffnung in einem zweiten Wandelement gebildet werden, Bewegen des ersten Wandelements und des zweiten Wandelements relativ zueinander und hierdurch Einstellen einer Überlappung zwischen den Wanddurchtrittsöffnungen in dem ersten und zweiten Wandelement.

Mit diesem Verfahren wird eine günstige Einstellung der Amplitude oder Frequenz der Druckpulsationen in der Flüssigkeit einer Verteilervorrichtung erzielt.

Eine bevorzugte Ausführungsform wird anhand der beiliegenden Figuren erläutert. Es zeigen:
- Figur 1:: eine teilgeschnittene Frontalansicht einer bevorzugten Ausführungsform der erfindungsgemäßen Verteilervorrichtung,
- Figur 2:: eine entlang der Linie A-A in Figur 1 geschnittene Seitenansicht der Verteilervorrichtung gemäß Figur 1.

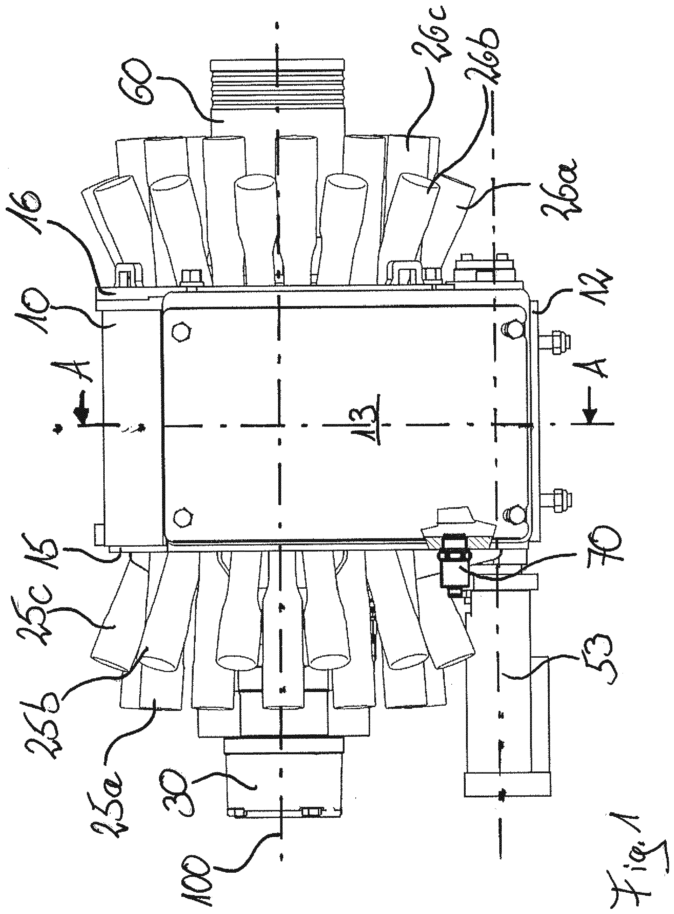

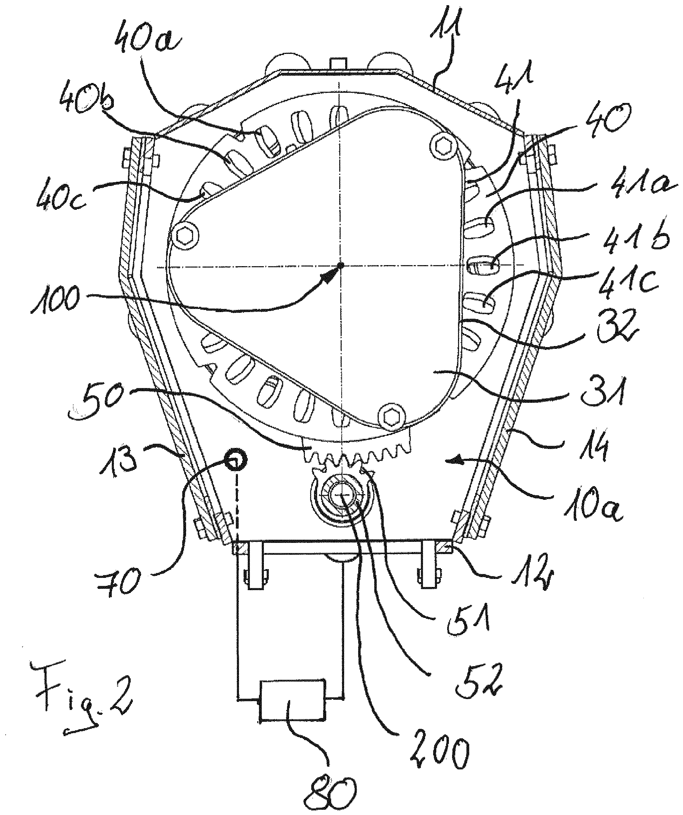

Die in den Fig. 1 und 2 abgebildete Verteilervorrichtung umfasst eine zentrale Verteilerkammer 10, die einen Verteilerinnenraum 10a umschließt. Die Verteilerkammer umschließt den Verteilerinnenraum mit einem oberen festen Wandelement 11, einem unteren festen Wandelement 12 mit einer Durchlassöffnung für große und schwere Festkörper, die in einer unterhalb der Verteilervorrichtung angeordneten Festkörpersammelvorrichtung aufgefangen werden können, und zwei seitlichen demontierbaren Deckeln 13, 14.

Weiterhin umfasst die Verteilerkammer eine linksseitige Stirnwand 15 und eine rechtsseitige Stirnwand 16, welche ebenfalls den Verteilerinnenraum gegenüber der Umgebung abdichten.

Sowohl an der linken Stirnwand 15 als auch an der rechten Stirnwand 16 sind eine Vielzahl von Anschlussstutzen 25a, b, c, und 26a, b, c angeordnet.

An der linken Stirnwand 15 ist außerhalb des Verteilerinnenraums weiterhin ein Schneidmesserantrieb 30 angeordnet, der mittels einer Schneidmesserantriebswelle ein im Verteilerinnenraum angeordnetes Schneidmesser 31 für eine Drehbewegung um eine Schneidmesserrotationsachse 100 antreibt. Das Schneidmesser 31 weist eine etwa dreieckige Kontur mit abgerundeten Ecken auf. Am Außenumfang dieser Kontur ist eine Schneidkante 32 ausgebildet.

Die Schneidkante 32 des Schneidmessers 31 liegt auf einer zum Kammerinnenraum weisenden Stirnfläche einer ersten innenliegenden Lochmesserscheibe 40 auf. Die Lochmesserscheibe 40 liegt wiederum mit einer dem Kammerinnenraum abgewandten Stirnfläche auf einer zum Kammerinnenraum weisenden Stirnfläche einer ersten außenliegenden Lochmesserscheibe 41 auf. Die dem Kammerinnenraum abgewandte Stirnfläche der ersten, außenliegenden Lochmesserscheibe liegt an der linken Stirnwand 15 der Verteilerkammer an.

Die innenliegende Lochmesserscheibe 40 weist eine Vielzahl von Durchtrittsöffnungen 40a, b, c auf. Die innenliegende Lochmesserscheibe 40 ist ortsfest und unbeweglich in der Verteilerkammer befestigt, dies kann beispielsweise durch Befestigung an der Stirnwand erfolgen. Die Durchtrittsöffnungen 40a,b,c liegen in Fluchtung mit den Anschlussstutzen 25a,b,c.

Die außenliegende Lochmesserscheibe 41 weist eine Vielzahl von Durchtrittsöffnungen 41a, b, c auf. Die Anzahl der Durchtrittsöffnungen 40a, b, c und 41a, b, c und deren Anordnung ist in beiden Lochmesserscheiben gleich, sodass die Durchtrittsöffnungen in einer Position der beiden Lochmesserscheiben zueinander kongruent übereinanderliegen und Lochmesserdurchtrittsöffnungen bilden.

Die Austrittsöffnungen 41a, b, c in der außenliegenden Lochmesserscheibe stehen in Fluidverbindung mit den Anschlussstutzen 25a, b, c in solcher Weise, dass jeweils eine Austrittsöffnung mit einem Anschlussstutzen in Verbindung steht.

Feststoffhaltige Flüssigkeit wird über einen Einlassstutzen 60, der zentral entlang der Längsachse 100 verläuft und mittig zwischen den Anschlussstutzen 26a, b, c in die Verteilerkammer mündet, eingeführt. Die Flüssigkeit kann dann über die nicht durch das Schneidmesser 31 abgedeckten Austrittsöffnungen aus der Verteilerkammer durch die Lochdurchtrittsöffnungen in die Anschlussstutzen strömen. Durch die rotierende Bewegung des Schneidmessers werden hierbei wechselseitig die Austrittsöffnungen überstrichen, abgedeckt und wieder freigegeben, wodurch einerseits eine Schneidwirkung der Schneidkante 32 mit den Kanten der Austrittsöffnungen der innenliegenden Lochmesserscheibe auftritt nach Art einer Scherwirkung, wodurch Feststoffe wie Fasern, kleinere Holzstücke und dergleichen durchtrennt werden und eine pulsierende Beaufschlagung der Anschlussstutzen erfolgt.

Die außenliegende Lochmesserscheibe 41 weist an ihrem unteren Rand ein Zahnradsegment 50 auf, das sich über einen Umfangswinkel von ca. 30° erstreckt, alternativ aber auch als Vollkreiszahnrad ausgeführt sein kann. Das Zahnradsegment 50 steht in Eingriff mit einem Ritzel 51, das unterhalb des Zahnradsegments auf einer Schwenkwelle 52 befestigt ist. Die Schwenkwelle 52 wird durch einen Verstellaktuator 53 angetrieben und kann durch den Verstellaktuator, der beispielsweise als Servomotor ausgeführt sein kann, linksrum und rechtsrum um eine Stellachse 200 verschwenkt werden. Durch diese Verstellbewegungen wird die außenliegende Lochmesserscheibe 41 um die Antriebsachse 100 mittels des Zahneingriffs verschwenkt und hierdurch der Grad der Überlappung zwischen den Austrittsöffnungen 40a, b, c und 41a, b, c eingestellt.

Grundsätzlich ist zu verstehen, dass auch auf der rechten Stirnwand 16 entsprechende Anordnungen von Lochmesserscheiben, einem Schneidmesser mit Schneidkante und einem entsprechenden Zahnradsegment mit Zahnradritzel, das ebenfalls auf der Verstellwelle 52 befestigt ist, vorgesehen sein kann. In diesem Fall wird durch synchrone, beidseitige Verstellung der Lochmesserscheiben zueinander der Durchtrittsquerschnitt durch die Austrittsöffnungen eingestellt und kann von einem maximalen Durchtrittsquerschnitt, bei dem die Durchtrittsöffnungen genau fluchtend zueinander angeordnet sind, ausgehend verringert werden. Als Variante kann jedoch auch nur auf einer Seite eine Verstellbarkeit der Lochmesserscheiben zueinander vorgesehen sein, wohingegen auf der anderen Seite eine einzige Lochmesserscheibe nach Stand der Technik vorgesehen ist. In diesem Fall wird der Strömungswiderstand nur durch Verstellung von einer Seite eingestellt.

In die Verteilerkammerwandung, hier in die linke Stirnseite 15, ist weiterhin ein Drucksensor 70 eingesetzt, welcher den Flüssigkeitsdruck im Verteilerinnenraum erfasst. Mithilfe dieses Drucksensors 70 können die Druckpulsationen in der feststoffhaltigen Flüssigkeit erfasst werden. Der Drucksensor 70 ist an eine Steuerungseinheit 80 angeschlossen, welche eine elektronische Datenverarbeitung der Druckpulsationen ausführt und mittels einer Signalleitung den Verstellantrieb 53 ansteuert.

## Patentansprüche

1. Verteilervorrichtung zum Verteilen von feststoffhaltigen Flüssigkeiten, insbesondere Gülle, umfassend
- eine Verteilerkammer mit einer Einlassöffnung, die in einen Kammerinnenraum der Verteilerkammer mündet, wobei die Verteilerkammer eine erste Wandung, insbesondere eine erste Stirnwand, mit mehreren ersten Anschlussstutzen aufweist,
- eine erste Lochmesseranordnung mit mehreren Lochmesserdurchtrittsöffnungen, die den Kammerinnenraum mit den mehreren ersten Anschlussstutzen verbinden,
- ein erstes Schneidmesser, das mindestens eine Schneidkante aufweist, die an der ersten Lochmesseranordnung anliegt und relativ zu der ersten Lochmesseranordnung bewegbar ist,
- eine Messerantriebseinrichtung, die mit dem ersten Schneidmesser gekoppelt und ausgebildet ist, um das erste Schneidmesser relativ zu der ersten Lochmesseranordnung auf einer Bewegungsbahn zu bewegen,
**dadurch gekennzeichnet, dass**
- die erste Lochmesseranordnung ein erstes Wandelement mit mehreren ersten Wanddurchtrittsöffnungen und ein zweites Wandelement mit mehreren zweiten Wanddurchtrittsöffnungen umfasst, wobei die ersten und zweiten Wanddurchtrittsöffnungen zumindest teilweise überlappen und hierdurch die Lochmesserdurchtrittsöffnungen bilden,
- das erste Wandelement und das zweite Wandelement einander anliegen und relativ zueinander bewegbar sind,
- die ersten Wanddurchtrittsöffnungen und die zweiten Wanddurchtrittsöffnungen sich in einer ersten Position des ersten Wandelements zu dem zweiten Wandelement so überlappen, dass zwischen einer ersten Wanddurchtrittsöffnung der mehreren ersten Wanddurchtrittsöffnungen und einer zweiten Wanddurchtrittsöffnung der mehreren zweiten Wanddurchtrittsöffnungen eine erste Überlappung mit einem ersten Überlappungsdurchtrittsquerschnitt ausgebildet ist, der den Querschnitt einer Lochmesserdurchtrittsöffnung der mehreren ersten Lochmesserdurchtrittsöffnungen in der ersten Position ausbildet, und
- die ersten Wanddurchtrittsöffnungen und die zweiten Wanddurchtrittsöffnungen sich in einer zweiten Position des ersten Wandelements zu dem zweiten Wandelement so überlappen, dass zwischen der ersten Wanddurchtrittsöffnung und der zweiten Wanddurchtrittsöffnung eine zweite Überlappung mit einem zweiten Überlappungsdurchtrittsquerschnitt ausgebildet ist, der den Querschnitt der Lochmesserdurchtrittsöffnung der mehreren ersten Lochmesserdurchtrittsöffnungen in der zweiten Position ausbildet und der kleiner als der erste Überlappungsdurchtrittsquerschnitt ist.

2. Verteilervorrichtung nach Anspruch 1
**dadurch gekennzeichnet, dass** in der ersten Position jede der ersten Wanddurchtrittsöffnungen mit jeweils einer der zweiten Wanddurchtrittsöffnungen überlappt.

3. Verteilervorrichtung nach Anspruch 1 oder 2
**dadurch gekennzeichnet, dass** in der ersten Position jede der ersten Lochmesserdurchtrittsöffnungen mit jeweils einem der ersten Anschlussstutzen in Fluidverbindung steht.

4. Verteilervorrichtung nach einem der vorhergehenden Ansprüche
**dadurch gekennzeichnet, dass** die ersten und zweiten Wanddurchtrittsöffnungen in der ersten Position einen ersten Durchlassquerschnitt durch die Lochmesseranordnung ausbilden, der größer ist als ein zweiter Durchlassquerschnitt, den die ersten und zweiten Wanddurchtrittsöffnungen in der zweiten Position ausbilden, wobei
- der erste Durchlassquerschnitt durch die Summe der Überlappungsdurchtrittsquerschnitte der ersten und zweiten Wanddurchtrittsöffnungen in der ersten Position, und
- der zweite Durchlassquerschnitt durch die Summe der Überlappungsdurchtrittsquerschnitte der ersten und zweiten Wanddurchtrittsöffnungen in der zweiten Position gebildet wird.

5. Verteilervorrichtung nach einem der vorhergehenden Ansprüche
**dadurch gekennzeichnet, dass** das erste Wandelement als erste Lochmesserscheibe und das zweite Wandelement als zweite Lochscheibe ausgebildet ist, die Schneidkante des Schneidmessers in einer ersten Einbaukonfiguration an einer ersten Stirnfläche der ersten Lochmesserscheibe anliegt, eine der ersten Stirnfläche gegenüberliegende zweite Stirnfläche der ersten Lochmesserscheibe an einer ersten Stirnfläche der zweiten Lochscheibe anliegt und eine der ersten Stirnfläche der zweiten Lochscheibe gegenüberliegende zweite Stirnfläche der zweiten Lochscheibe den Anschlussstutzen zugewandt ist.

6. Verteilervorrichtung nach einem der vorhergehenden Ansprüche
**dadurch gekennzeichnet, dass** dasjenige Wandelement des ersten und zweiten Wandelements, an dem die Schneidkante des Schneidmessers anliegt, unbeweglich zu der Schneidkammer montiert ist und das andere Wandelement des ersten und zweiten Wandelements relativ beweglich zu der Schneidkammer gelagert ist.

7. Verteilervorrichtung nach einem der vorhergehenden Ansprüche
**dadurch gekennzeichnet, dass** die Lochmesseranordnung in einer dritten Position keine Überlappung zwischen den Wanddurchtrittsöffnung in dem ersten und zweiten Wandelement aufweist, sodass die Lochmesserdurchtrittsöffnungen gesperrt sind.

8. Verteilervorrichtung nach einem der vorhergehenden Ansprüche
**dadurch gekennzeichnet, dass** die Lochmesseranordnung mit einer Verstelleinrichtung gekoppelt ist, die einen Verstellaktuator umfasst und ausgebildet ist, um mittels des Verstellaktuators das erste und zweite Wandelement relativ zueinander zu verstellen.

9. Verteilervorrichtung nach dem vorhergehenden Anspruch
**dadurch gekennzeichnet, dass** das erste und zweite Wandelement der Lochmesseranordnung um eine Verstellachse zueinander verdrehbar gelagert sind und die Verstelleinrichtung ein Zahnradsegment umfasst, das an einem der beiden Wandelemente angeordnet ist und der Verstellaktuator ein Ritzel antreibt, das in das Zahnradsegment eingreiftum mittels des Verstellaktuators das erste und zweite Wandelement relativ zueinander zu verstellen.

10. Verteilervorrichtung nach Anspruch 8 oder 9,
**dadurch gekennzeichnet, dass** die Verstelleinrichtung mit einer Steuereinheit signaltechnisch gekoppelt ist und die Steuereinheit mit einem Sensor signaltechnisch gekoppelt und ausgebildet ist, um aus von dem Sensor empfangenen Daten einen Kennwert für die Druckpulsationshöhe oder -frequenz zu bilden und um anhand dieses Kennwerts den Verstellaktuator anzusteuern.

11. Verteilervorrichtung nach dem vorhergehenden Anspruch 10,
**dadurch gekennzeichnet, dass** der Sensor ein Drucksensor ist, der vorzugsweise
- im Kammerinnenraum, oder
- stromaufwärts der Einlassöffnung,
angeordnet ist.

12. Verteilervorrichtung nach dem vorhergehenden Anspruch 10 oder 11,
**dadurch gekennzeichnet, dass** die Steuerungseinheit ausgebildet ist, um
- in einem ersten Schritt die Verstelleinrichtung in einer ersten Verstellrichtung anzusteuern,
- anhand der Sensordaten eine erste Veränderung der Druckpulsationen durch die Verstellung der Verstelleinrichtung im ersten Schritt festzustellen,
- in einem zweiten Schritt die Verstelleinrichtung in einer zu der ersten entgegengesetzten zweiten Verstellrichtung anzusteuern
- anhand der Sensordaten eine zweite Veränderung der Druckpulsationen durch die Verstellung der Verstelleinrichtung im zweiten Schritt festzustellen, und
- die erste und die zweite Veränderung miteinander zu vergleichen und hierauf folgend in Abhängigkeit des Vergleichs die Verstelleinrichtung in derjenigen Verstellrichtung anzusteuern, für welche die Veränderung eine größere Verringerung der Druckpulsationen ergeben hat.

13. Verteilervorrichtung nach mindestens einem der vorhergehenden Ansprüche, wobei
- sich die Lochmesserdurchtrittsöffnungen von einer dem Kammerinnenraum zugewandten ersten Stirnseite der ersten Lochmesseranordnung zu einer dem Kammerinnenraum abgewandten zweiten Stirnseite der zweiten Lochmesseranordnung erstrecken,
- wobei die Lochmesserdurchtrittsöffnungen im Bereich der zweiten Stirnseite größer sind als im Bereich der ersten Stirnseite,
und/oder
- wobei die Größe und/oder der Auslassöffnungsquerschnitt der Lochmesserdurchtrittsöffnungen von der ersten Stirnseite zu der zweiten Stirnseite zunimmt, insbesondere stetig zunimmt,.

14. Verteilervorrichtung nach einem der vorhergehenden Ansprüche, umfassend
- eine Spannvorrichtung, die ausgebildet ist, um eine Anpresskraft zwischen dem ersten Schneidmesser und der ersten Lochmesseranordnung zu bewirken.

15. Lochmesseranordnung für eine Verteilervorrichtung, insbesondere eine Verteilervorrichtung nach einem der vorhergehenden Ansprüche, umfassend:
- eine erste Stirnfläche,
- eine der ersten Stirnfläche gegenüberliegende zweite Stirnfläche,
- mehrere Lochmesserdurchtrittsöffnungen, die sich von der ersten Stirnseite zu der zweiten Stirnseite erstrecken,
**gekennzeichnet durch**
- ein erstes Wandelement mit mehreren ersten Wanddurchtrittsöffnungen und
- ein zweites Wandelement mit mehreren zweiten Wanddurchtrittsöffnungen,
- wobei die ersten und zweiten Wanddurchtrittsöffnungen zumindest teilweise überlappen und hierdurch die Lochmesserdurchtrittsöffnungen bilden,
- das erste Wandelement und das zweite Wandelement einander anliegen und relativ zueinander bewegbar sind,
- die ersten Wanddurchtrittsöffnungen und die zweiten Wanddurchtrittsöffnungen sich in einer ersten Position des ersten Wandelements zu dem zweiten Wandelement so überlappen, dass zwischen einer ersten Wanddurchtrittsöffnung der mehreren ersten Wanddurchtrittsöffnungen und einer zweiten Wanddurchtrittsöffnung der mehreren zweiten Wanddurchtrittsöffnungen eine erste Überlappung mit einem ersten Überlappungsdurchtrittsquerschnitt ausgebildet ist, der den Querschnitt einer Lochmesserdurchtrittsöffnung der mehreren ersten Lochmesserdurchtrittsöffnungen in der ersten Position ausbildet, und
- die ersten Wanddurchtrittsöffnungen und die zweiten Wanddurchtrittsöffnungen sich in einer zweiten Position des ersten Wandelements zu dem zweiten Wandelement so überlappen, dass zwischen der ersten Wanddurchtrittsöffnung und der zweiten Wanddurchtrittsöffnung eine zweite Überlappung mit einem zweiten Überlappungsdurchtrittsquerschnitt ausgebildet ist, der den Querschnitt der Lochmesserdurchtrittsöffnung der mehreren ersten Lochmesserdurchtrittsöffnungen in der zweiten Position ausbildet und der kleiner als der erste Überlappungsdurchtrittsquerschnitt ist.

16. Lochmesseranordnung nach dem vorhergehenden Anspruch 15, wobei
- die Lochmesseranordnung fortgebildet ist mit den Merkmalen der ersten Lochmesseranordnung nach einem der vorgehenden Ansprüche 2-14.

17. Verwendung einer Lochmesseranordnung nach dem vorhergehenden Anspruch 15 oder 16 in einer Verteilervorrichtung, vorzugsweise in einer Verteilervorrichtung nach mindestens einem der Ansprüche 1-14.

18. Verfahren zum Einstellen der Amplitude einer Druckpulsation in einer Verteilervorrichtung für eine Flüssigkeit, mit den Schritten:
- Einleiten der Flüssigkeit in einen Kammerinnenraum durch eine oder mehrere Einlassöffnungen,
- Ausleiten der Flüssigkeit aus dem Kammerinnenraum durch mehrere Lochmesserdurchtrittsöffnungen,
- Wobei jede der Lochmesserdurchtrittsöffnungen durch jeweils eine Wanddurchtrittsöffnung in einem ersten Wandelement und eine Wanddurchtrittsöffnung in einem zweiten Wandelement gebildet werden,
- Bewegen des ersten Wandelements und des zweiten Wandelements relativ zueinander und hierdurch Einstellen einer Überlappung zwischen den Wanddurchtrittsöffnungen in dem ersten und zweiten Wandelement.
